# EUROPEAN PATENT APPLICATION

(11) **EP 4 474 780 A1**
(43) Date of publication of application: **11.12.2024**
(21) Application number: 23749815.9
(22) Date of filing: 02.02.2023
(51) Int. Cl.: G01H 3/00

(54) **NOISE CALCULATION DEVICE AND SOUND COLLECTION SYSTEM**

(30) Priority: 04.02.2022 JP 2022016402
(71) Applicant: Hitachi Construction Machinery Co., Ltd., Tokyo 110-0015 (JP)
(72) Inventor: KUNIOKA Shogo, Tsuchiura-shi, Ibaraki 300-0013 (JP); ITO Hiroki, Tokyo 100-8280 (JP); UKEDA Masaharu, Tokyo 100-8280 (JP); MURASE Kaori, Tokyo 100-8280 (JP); YOKOYAMA Hisashi, Tsuchiura-shi, Ibaraki 300-0013 (JP); INOSE Satoshi, Tsuchiura-shi, Ibaraki 300-0013 (JP)
(74) Representative: MERH-IP Matias Erny Reichl Hoffmann Patentanwälte PartG mbB
(86) International application number: PCT/JP2023/003379
(87) International publication number: WO 2023/149499

(57) **Abstract**

An objective of the present invention is to provide a noise calculation device and a sound collection system capable of distinguishing between a target sound and a noise included in ambient sound. A noise calculation device 20 of the present invention calculates a noise sound pressure level of the noise included in the ambient sound of an analysis target 40, which includes the target sound emitted by the analysis target 40. The noise calculation device 20 identifies the reference sound pressure level of the target sound corresponding to a distance from the analysis target 40 to the microphone 209 using a physical model that defines a relationship between the distance and the reference sound pressure level of the target sound. The noise calculation device 20 calculates an estimated sound pressure level of the noise included in the ambient sound based on a detected sound pressure level of the ambient sound detected by the microphone 209 and the reference sound pressure level of the target sound identified using the physical model.

## Description

### Technical Field

The present invention relates to a noise calculation device for calculating a sound pressure level of a noise included in an ambient sound of an analysis target, which includes a sound emitted by the analysis target (target sound), and a sound collection system for collecting or recording the target sound.

### Background Art

Conventionally, a sound collection system for collecting and analyzing sounds emitted by an analysis target (target sound) is known. In the sound collection system, the target sound of the analysis target is compared with normal sounds, and based on the comparison results, abnormalities in the analysis target can be analyzed.

An objective of Patent Literature 1 is to provide a diagnostic device, a diagnostic system, and a program that can perform sound acquisition at a proper location according to characteristics of each model of devices acquiring the sound when performing analysis of a cause of the sound by acquiring the sound that has occurred (Paragraph [0007], Summary).

To achieve the objective, a traveled distance measurement section (38) of Patent Literature 1 (Summary) measures a traveled distance of its own device from a reference location using acceleration information obtained by an acceleration sensor. A posture change measurement section (39) measures a posture change amount of its own device from a reference status using angular velocity information obtained by a gyro sensor. A control section (33) employs the traveled distance measurement section (38) and the posture change measurement section (39) to calculate the traveled distance and the posture change of the own device until the own device reaches a proper location where the sound signal acquired by a sound acquisition section (31) becomes to have a suitable loudness for acquisition, and generates them as proper location information. When the sound acquisition section (31) attempts to acquire a sound signal while the generated proper location information is present, the control section (33) guides the own device to the proper location using the generated proper location information and the measurement results by the traveled distance measurement section (38) and posture change measurement section (39).

### Citation List

### Patent Literature

Patent Literature 1: JP 2017-111293 A

### Summary of Invention

### Technical Problem

As described above, in Patent Literature 1, the own device is guided to the proper location such that the own device reaches the proper location where the sound signal acquired by the sound acquisition section (31) becomes to have a suitable loudness for acquisition (Summary). In other words, in Patent Literature 1, the location of the own device is adjusted such that the sound pressure level of the sound falls within a certain range.

However, at a construction site, for example, in addition to the sound emitted by the analysis target (target sound), other noises occur such as those emitted by other machines on the site or ambient working noises, and the like. In other words, the sound detected around the analysis target (ambient sound) includes the noise in addition to the target sound. In such an environment where the ambient sounds include the noise, when the technology of Patent Literature 1 is employed, the location of the own device is adjusted based on the sound pressure level of the target sound and the ambient sounds including the noise, which will make the accurate analysis of the target sound difficult and in turn affect the accuracy of determining abnormalities in analysis, and the like.

The objective of the present invention is to provide a noise calculation device and a sound collection system that can distinguish between the target sound and the noise included in the ambient sounds, taking into consideration the above issues.

### Solution to Problem

In order to achieve the above-described objective, a noise calculation device according to the present invention calculates a sound pressure level of a noise included in an ambient sound of an analysis target, the ambient sound including a target sound as a sound emitted by the analysis target. The noise calculation device includes: a storage device storing a program and a processing unit configured to execute the program. The processing unit identifies a reference sound pressure level of the target sound corresponding to a distance from the analysis target to the ambient sound detection device that collects the ambient sound of the analysis target, using a physical model that defines a relationship between the distance and the reference sound pressure level of the target sound, and includes a noise calculation section that calculates an estimated sound pressure level of the noise included in the ambient sound based on the detected sound pressure level of the ambient sound detected by the ambient sound detection device and the reference sound pressure level of the target sound identified using the physical model.

Furthermore, a sound collection system according to the present invention collects a target sound as a sound emitted by an analysis target. The sound collection system includes a server apparatus and a mobile device connected to the server apparatus. The mobile device includes a storage device storing a program and a processing unit configured to execute the program. The processing unit of the mobile device includes an ambient sound detection section that measures the distance to the analysis target and detects a sound pressure level of an ambient sound occurring around the analysis target. The server apparatus includes a storage device storing a program and a central processing unit configured to execute the program. The central processing unit of the server apparatus includes a physical model storage section and a noise calculation section. The physical model storage section stores a physical model that defines a relationship between the distance and the reference sound pressure level of the target sound. The noise calculation section calculates an estimated sound pressure level of a noise included in the ambient sound based on the detected sound pressure level of the ambient sound and the reference sound pressure level of the target sound that corresponds to the distance and is identified using the physical model.

### Advantageous Effects of Invention

The present invention allows distinguishing between the target sound and the noise included in the ambient sounds, and allows collecting the sounds available for the analysis of abnormalities, and the like.

### Brief Description of Drawings

Fig. 1 is a simplified configuration diagram illustrating an overall configuration of a sound collection system according to a first embodiment of the present invention.
Fig. 2A is a diagram illustrating an example of hardware configuration of a mobile device in the first embodiment.
Fig. 2B is a diagram illustrating an example of a functional configuration of the mobile device in the first embodiment.
Fig. 3A is a diagram illustrating an example of hardware configuration of a server apparatus in the first embodiment.
Fig. 3B is a diagram illustrating an example of a functional configuration of the server apparatus in the first embodiment.
Fig. 4 is a flowchart illustrating a process executed by the mobile device in the first embodiment.
Fig. 5 is a flowchart for guiding the mobile device to an appropriate recording location and a posture in the first embodiment (details of S105 in Fig. 4).
Fig. 6(A) to Fig. 6(C) are diagrams illustrating examples of a first to a third screens used in the flowchart of Fig. 5.
Fig. 7(A) is a diagram illustrating a relationship between a machine to be diagnosed and measurement points P1 to P3 in the first embodiment, and Fig. 7(B) is a diagram illustrating a relationship between the distance between the machine to be diagnosed and each of the measurement points P1 to P3 in Fig. 7(A) and the sound pressure level of the target sound.
Fig. 8 is a flowchart for calculating a noise in the first embodiment (details of S106 in Fig. 4).
Fig. 9 is a simplified configuration diagram illustrating an overall configuration of a sound collection system according to a second embodiment of the present invention.
Fig. 10 a diagram illustrating an example of a functional configuration of the mobile device in the second embodiment.
Fig. 11 is a flowchart illustrating a process executed by the mobile device in the second embodiment.

### Description of Embodiments

### <A. First embodiment>

### [A-1. Configuration]

### (A-1-1. Overall Configuration)

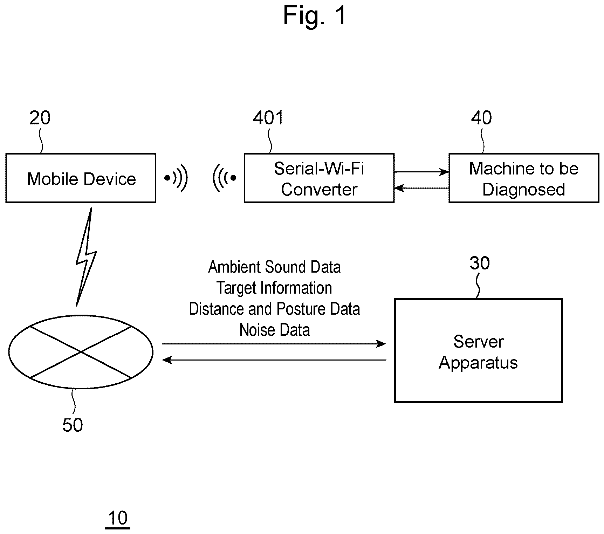

Fig. 1 illustrates a simplified configuration diagram of an overall configuration of a sound collection system 10 of the first embodiment of the present invention. The sound collection system 10 includes a mobile device 20 and a server apparatus 30. The mobile device 20 collects or records sounds (ambient sounds) occurring around a machine to be diagnosed 40. The machine to be diagnosed 40 can be, for example, construction machinery (excavator, wheel loader, bulldozer, and the like). The ambient sounds include not only the sound emitted by the machine to be diagnosed 40 itself (target sound), but also other noises such as the operating sounds of other construction machinery, working noises in the surroundings, environmental sounds, and other noises emitted from sources other than the machine to be diagnosed 40.

The mobile device 20 determines a signal-to-noise ratio (S/N ratio) of the target sound and the noise included in the ambient sound to determine whether the ambient sound is suitable for analysis of the target sound. Various types of target information (described below) are acquired from the machine to be diagnosed 40 via a serial-Wi-Fi converter 401 of the machine to be diagnosed 40 at the determinations of the signal-to-noise ratio. Therefore, it is possible to recognize the machine to be diagnosed 40 as a part of the sound collection system 10.

When the ambient sound is suitable for analysis of the target sound, the mobile device 20 collects or records the ambient sounds. The mobile device 20 then transmits data of ambient sound (ambient sound data) and other data to the server apparatus 30 via a communication network 50 such as the Internet or a LAN (Local Area Network). The server apparatus 30 analyzes the received ambient sound data and executes the diagnosis (analysis) of the machine to be diagnosed 40. The diagnosis (analysis) here includes, for example, an abnormality diagnosis of the machine to be diagnosed 40. Since the ambient sound is collected or recorded at the mobile device 20 when the ambient sound is suitable for analysis of the target sound, the server apparatus 30 can extract a high-quality target sound, improve an analysis accuracy, and determine an abnormality with a high accuracy.

The target sound in the first embodiment is assumed to be the operating sound emitted by the overall machine to be diagnosed 40, but it may also be an operating sound emitted by a specific part (for example, a pump or an injector) of the machine to be diagnosed 40 (this point is described below). The noise refers to a sound other than the target sound, including the ambient sounds such as sound of wind and human voices.

### (A-1-2. Mobile Device 20)

### (A-1-2-1. Overview)

In the first embodiment, the mobile device 20 functions as a noise calculation device that calculates the noise sound pressure level of the noise included in the ambient sound of the machine to be diagnosed 40, and also functions as an ambient sound detection device that collects or records the ambient sounds. The mobile device 20 is a portable device, such as a smart phone, a tablet personal computer (tablet PC), a notebook PC, and the like.

### (A-1-2-2. Hardware Configuration of the Mobile Device 20)

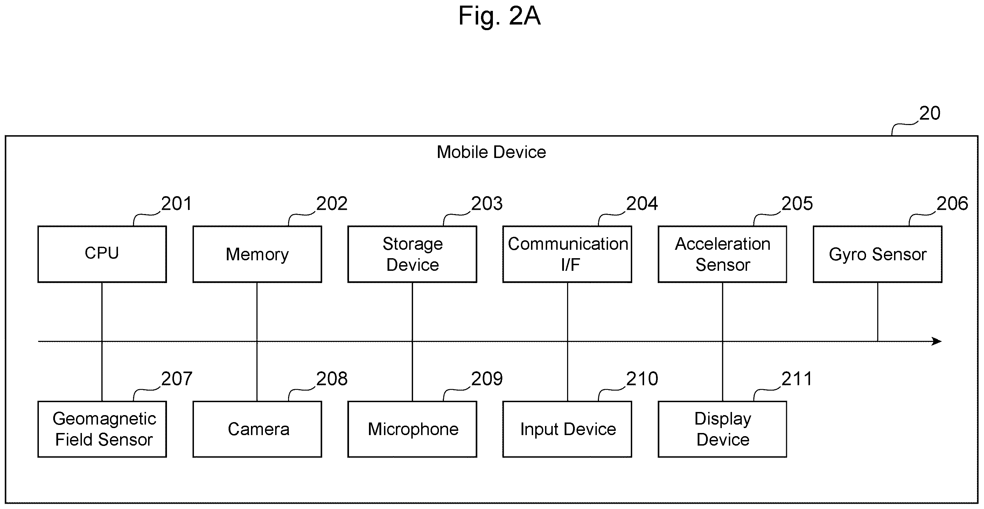

Fig. 2A illustrates an example of the hardware configuration of the mobile device 20 in the first embodiment. As illustrated in Fig. 2A, the mobile device 20 includes a processing unit (CPU) 201, a memory 202, a storage device 203, a communication interface (I/F) 204, an acceleration sensor 205, a gyro sensor 206, a geomagnetic field sensor 207, a camera 208, a microphone 209, an input device 210, and a display device 211.

The CPU 201 is a computer that executes various programs installed in the storage device 203. The memory 202 functions as the main memory that stores various programs, data, and the like necessary for the CPU 201 to execute the various programs stored in the storage device 203. Specifically, the memory 202 stores a Basic Input/Output System (BIOS), an Extensible Firmware Interface (EFI), and other boot programs, and the like.

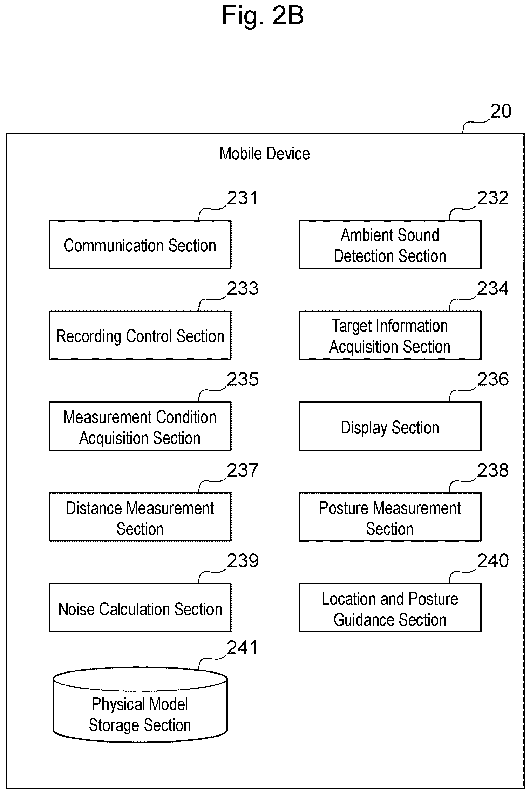

The storage device 203 stores various programs and data. Each function of the mobile device 20, described below, is realized by the CPU 201, which loads the program stored in the storage device 203 into the memory 202 and executes them. In addition, the various data necessary to realize the functions, such as data held by a physical model storage section 241 (Fig. 2B) described below, and data generated during processing, are stored in the storage device 203, and the like.

The acceleration sensor 205 detects accelerations of the mobile device 20 in the three axes. The gyro sensor 206 detects the posture (orientation) of the mobile device 20 by using Coriolis force to detect changes in rotation or orientation of the mobile device 20 as angular velocities. The geomagnetic field sensor 207 detects the posture (orientation) of the mobile device 20 using the geomagnetic field. The camera 208 is a color camera and is used to capture images of the machine to be diagnosed 40, and the like. The acceleration sensor 205, the gyro sensor 206, the geomagnetic field sensor 207, and the camera 208 function as means for acquiring the location information and the posture information of the mobile device 20.

The microphone 209 serves as means for detecting the ambient sound of the machine to be diagnosed 40. The input device 210 accepts input from a user. The display device 211 displays a guidance instruction and other information of the mobile device 20 to the user of the mobile device 20.

### (A-1-2-3. Functional Configuration of the Mobile Device 20)

Fig. 2B illustrates an example of a functional configuration diagram of the mobile device 20 in the first embodiment. Each function of the mobile device 20 illustrated in Fig. 2B is realized by executing a program stored in the storage device 203 by the CPU 201. In other words, each function illustrated in Fig. 2B is configured as a function by the processing unit of the mobile device 20. The CPU 201 (processing unit) of the mobile device 20 includes a communication section 231, an ambient sound detection section 232, a recording control section 233, a target information acquisition section 234, a measurement condition acquisition section 235, a display section 236, a distance measurement section 237, a posture measurement section 238, a noise calculation section 239, a location and posture guidance section 240, and the physical model storage section 241.

The communication section 231 sends and receives signals to and from external devices via the communication network 50 (Fig. 1). In the first embodiment, the communication section 231 sends and receives signals to and from the server apparatus 30 and to and from the machine to be diagnosed 40. The communication section 231 is realized via the communication I/F 204. The ambient sound detection section 232 detects the ambient sounds occurring around the machine to be diagnosed 40 and generates the ambient sound signals. The ambient sound detection section 232 is realized via the microphone 209.

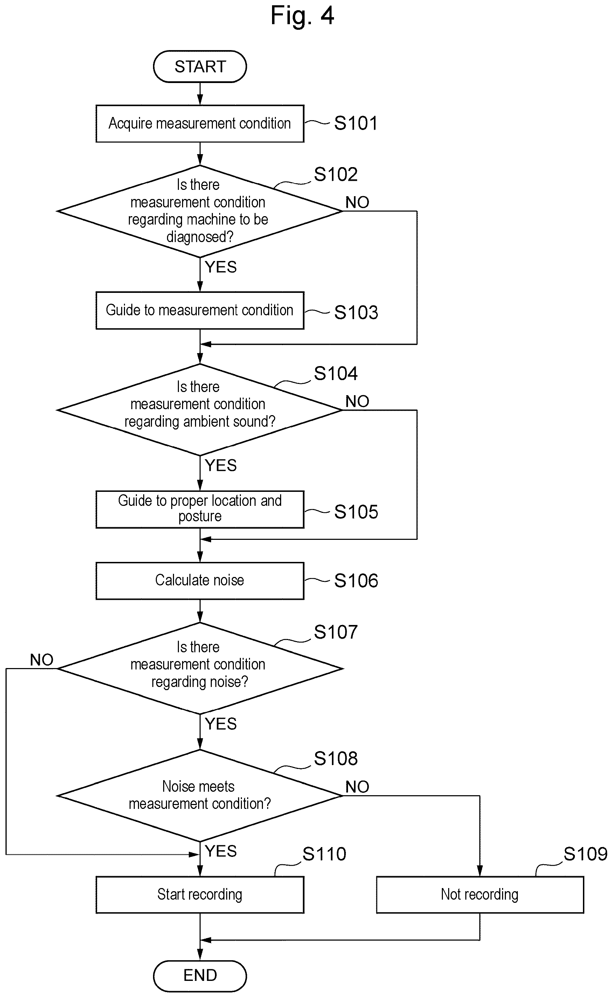

The recording control section 233 controls the collection or recording of the ambient sounds in general. The target information acquisition section 234 acquires information on the machine to be diagnosed 40 (target information) necessary for the collection or recording of the ambient sounds from the machine to be diagnosed 40. The measurement condition acquisition section 235 acquires measurement conditions from the server apparatus 30 via the communication section 231. Details of the measurement conditions are described below with reference to Fig. 4.

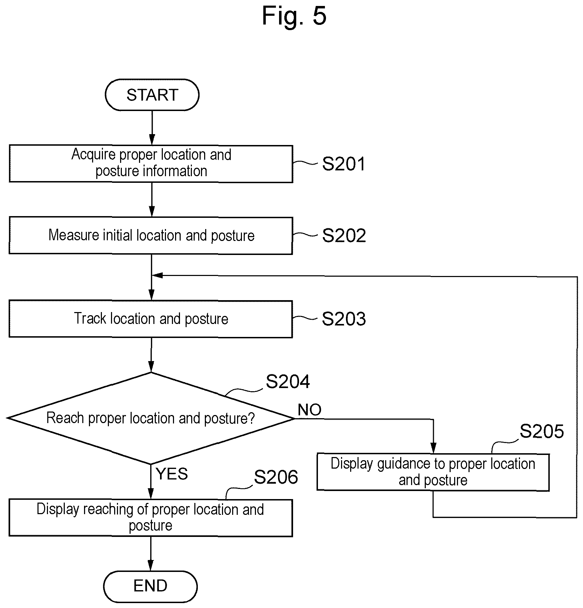

The display section 236 causes the display device 211 to display various data based on control by the recording control section 233. The distance measurement section 237 measures the distance between the machine to be diagnosed 40 and the mobile device 20 (the microphone 209) from information obtained from the acceleration sensor 205, the gyro sensor 206, the geomagnetic field sensor 207, and the camera 208 (details are described below with reference to Fig. 5). The posture measurement section 238 measures the postures of the mobile device 20 and the machine to be diagnosed 40 from the information obtained from the acceleration sensor 205, the gyro sensor 206, the geomagnetic field sensor 207, and the camera 208 (details are described below with reference to Fig. 5).

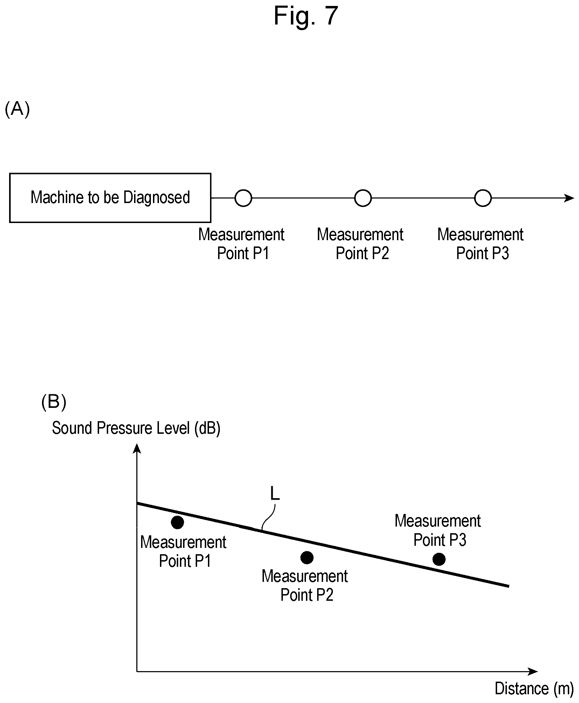

The noise calculation section 239 evaluates the noise included in the ambient sound detected by the microphone 209. Specifically, the noise calculation section 239 calculates an estimated value of the sound pressure level of the noise (estimated sound pressure level) based on the sound pressure level (detected sound pressure level) of the ambient sound detected by the microphone 209, and the like. The location and posture guidance section 240 generates information for guiding the location and the posture of the mobile device 20 (the microphone 209) for the user. The physical model storage section 241 stores the physical model described below using Figs. 7(A) and 7(B).

### (A-1-3. Server Apparatus 30)

The server apparatus 30 (Fig. 1) of the first embodiment provides the measurement conditions to the mobile device 20 and executes a diagnosis (analysis) of the machine to be diagnosed 40 based on the ambient sound data and the like received from the mobile device 20.

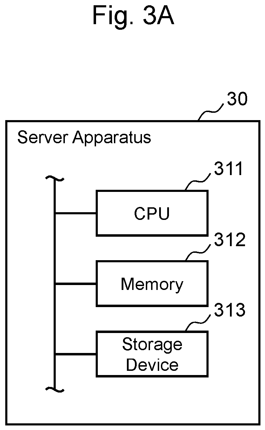

Fig. 3A illustrates an example of hardware configuration diagram of the server apparatus 30 in the first embodiment. As illustrated in Fig. 3A, the server apparatus 30 includes a central processing unit (CPU) 311, a memory 312, and a storage device 313.

The central processing unit 311 is a computer that executes various programs installed in the storage device 313. The memory 312 functions as the main memory that stores various programs, data, and the like necessary for the central processing unit 311 to execute the various programs stored in the storage device 313. The storage device 313 stores the various programs and data.

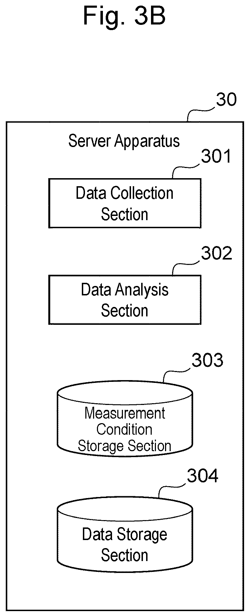

Fig. 3B illustrates an example of the functional configuration diagram of the server apparatus 30 in the first embodiment. Each function of the server apparatus 30 illustrated in Fig. 3B is realized by executing a program stored in the storage device 313 by the central processing unit 311. In other words, each function illustrated in Fig. 3B is configured as a function by the central processing unit 311 of the server apparatus 30.

As illustrated in Fig. 3B, the server apparatus 30 includes a data collection section 301, a data analysis section 302, a measurement condition storage section 303, and a data storage section 304. A data collection program and a data analysis program are installed in the storage device of the server apparatus 30. By executing these programs, the server apparatus 30 functions as the data collection section 301 and the data analysis section 302.

The data collection section 301 transmits the measurement conditions extracted from the measurement condition storage section 303 to the mobile device 20. The data collection section 301 also receives the ambient sound data, the target information, distance and posture data, and noise data transmitted from the mobile device 20 and stores them in the data storage section 304.

The data analysis section 302 executes the analysis based on the sound data, the machine information data, the distance and posture data, and the noise data stored in the data storage section 304. For example, the data analysis section 302 determines whether the sound is normal or abnormal by comparing it with a preprepared ambient sound model of normal conditions and calculating their similarity. The data analysis section 302 may also display the analysis result via the display section 236 of the mobile device 20. This allows the analysis result to be confirmed on the site.

The server apparatus 30 can collect the ambient sound data measured under the conditions meeting the measurement conditions, extract the high-quality target sounds, improve the analysis accuracy in the server apparatus 30, and determine the abnormalities with high accuracy. In addition, the server apparatus 30 can use the target information, the distance and posture data, and the noise data collected in association with the ambient sound data to, for example, understand the situation in which the ambient sound data have been acquired when the analysis result differs from the actual one, and an analyst can obtain useful knowledge about the cause.

The measurement condition storage section 303 stores the measurement conditions. The data storage section 304 stores the various data such as the ambient sound data.

### (A-1-4. Machine to be Diagnosed 40)

As described above, the mobile device 20 obtains specific target information from the machine to be diagnosed 40 when collecting or recording the ambient sounds of the machine to be diagnosed 40. Therefore, the machine to be diagnosed 40 can be considered as a part of the sound collection system 10. Therefore, the configuration of the machine to be diagnosed 40 is also described.

As described above, the machine to be diagnosed 40 is, for example, construction machinery such as a excavator, a wheel loader, a bulldozer, and the like. The machine to be diagnosed 40 includes the serial-Wi-Fi converter 401 that can communicate with the mobile device 20. Instead of the serial-Wi-Fi converter 401, a Bluetooth (registered trademark), a wireless LAN, or the like may be used. The machine to be diagnosed 40 is provided with a control device, which is not illustrated. From this control device, information on the machine to be diagnosed 40 (target information) is transmitted to the mobile device 20.

### [A-2. Control of the first embodiment]

### (A-2-1. Overview)

Next, the various controls in the sound collection system 10 of the first embodiment will be described, focusing on the mobile device 20. As described above, in the sound collection system 10 of the first embodiment, the user operates the mobile device 20 to collect or record the ambient sounds (target sounds) of the machine to be diagnosed 40. The ambient sounds collected or recorded are then transmitted from the mobile device 20 to the server apparatus 30 based on the operation of the user. The server apparatus 30 executes the analysis (the abnormality diagnosis) of the machine to be diagnosed 40 using the ambient sounds (the target sounds). The user herein is assumed to be, for example, an employee of a company that owns the machine to be diagnosed 40 or an employee of a manufacturer of the machine to be diagnosed 40.

In addition, the mobile device 20 can be carried by the user and moved to any location. Therefore, after recording the ambient sounds in an offline environment, the user can move to an online environment and transmit the ambient sound data to the server apparatus 30.

### (A-2-2. Overall Flow of Ambient Sound Recording)

Fig. 4 is a flowchart illustrating a process executed by the mobile device 20 in the first embodiment. When the mobile device 20 receives a command from the user to start the abnormality diagnosis (analysis) of the machine to be diagnosed 40 on the menu screen, which is not illustrated, the mobile device 20 acquires the measurement conditions from the server apparatus 30 (Step S101).

The measurement conditions here include three types of the measurement conditions: a measurement condition related to the machine to be diagnosed 40, a measurement condition related to the ambient sound, and a measurement condition related to the noise. The measurement condition related to the machine to be diagnosed 40 includes, for example, an engine rotation speed [rpm] of the machine to be diagnosed 40. The measurement condition related to the ambient sound includes, for example, the distance and the posture of the machine to be diagnosed 40 and the mobile device 20 (the microphone 209). The measurement condition related to the noise includes, for example, the signal to noise ratio of the target sound and the noise.

When obtaining the measurement conditions from the server apparatus 30, the mobile device 20 notifies the server apparatus 30 of the diagnosis content selected by the user. The server apparatus 30 then sends the measurement conditions corresponding to the notified diagnosis content to the mobile device 20. In addition to this, the mobile device 20 may obtain a model as the target information from the machine to be diagnosed 40 and notify the server apparatus 30. The server apparatus 30 may then transmit the measurement conditions to the mobile device 20 corresponding to a combination of the diagnosis content and the model.

Next, the mobile device 20 determines whether there is a measurement condition related to the machine to be diagnosed 40 among the measurement conditions received from the server apparatus 30 (Step S102 in Fig. 4). As described above, the measurement condition related to the machine to be diagnosed 40 includes a condition related to the engine rotation speed (for example, the engine rotation speed is required to be within a predetermined range (for example, 300 to 400 rpm)). When there is a measurement condition related to the machine to be diagnosed 40 (YES at S102), the mobile device 20 executes a process to guide the user to satisfy the measurement condition (Step S103).

For example, when the measurement condition related to the machine to be diagnosed 40 includes that the engine rotation speed of the machine to be diagnosed 40 is required to be within the predetermined range (for example, 300 to 400 rpm), the mobile device 20 (the display section 236) displays a message requesting that the engine rotation speed be within the predetermined range on the display device 211. Upon seeing the display, the user requests the driver of the machine to be diagnosed 40 to operate the machine to be diagnosed 40 to realize the above engine rotation speed. The engine rotation speed may be a value at idling, for example, without the operation of the driver on the accelerator pedal. Alternatively, the mobile device 20 may communicate with the machine to be diagnosed 40 and automatically control the machine to be diagnosed 40 such that the engine rotation speed is within the above-described predetermined range.

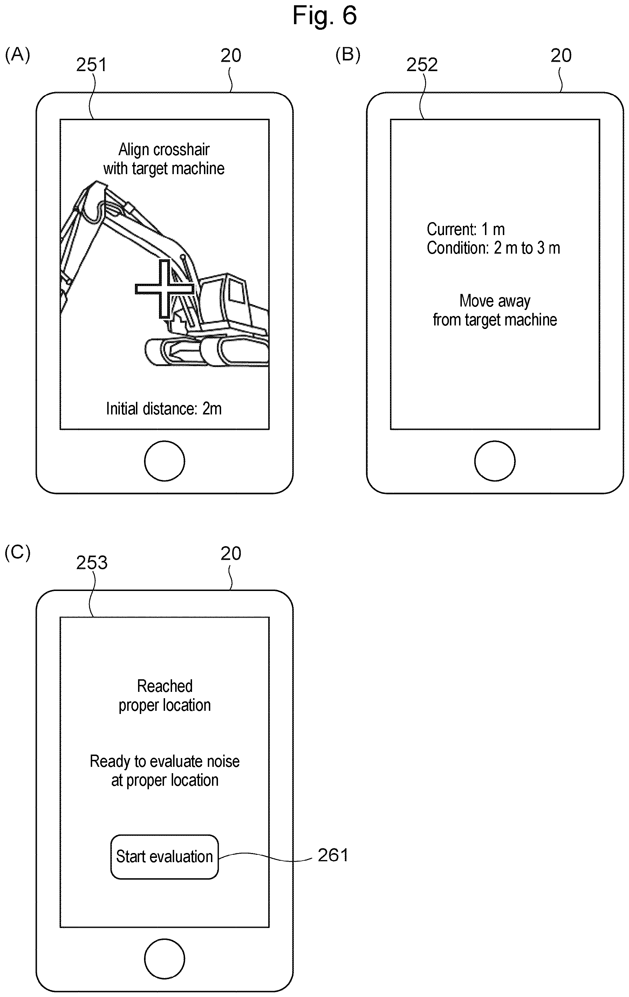

When there is no measurement condition related to the machine to be diagnosed 40 (S102: NO) or after Step S103, the process proceeds to Step S104. In Step S104, the mobile device 20 determines whether there is a measurement condition related to the ambient sound among the measurement conditions received from the server apparatus 30. As described above, the measurement condition related to the ambient sound includes, for example, the distance and postures of the machine to be diagnosed 40 and the mobile device 20. For example, when there are measurement condition related to the ambient sound, such as a distance of 2 meters between the machine to be diagnosed 40 and the mobile device 20 and a posture in which the mobile device 20 is in an oblique forward location to the machine to be diagnosed 40 (YES at S104), the mobile device 20 executes a process to guide the user to satisfy the measurement conditions (Step S105). Details of the guidance are described below with reference to Fig. 5 and Figs. 6(A) to 6(C).

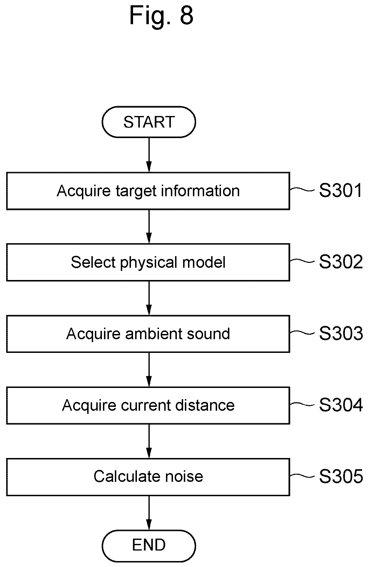

When there is no measurement condition related to the ambient sound (NO at S104) or after Step S105, the process proceeds to Step S106. At Step S106, the mobile device 20 evaluates the noise included in the ambient sound. Specifically, the mobile device 20 calculates the estimated sound pressure level of the noise included in the ambient sound (details are described below with reference to Figs. 7(A), 7(B), and 8).

Next, the mobile device 20 determines whether there is a measurement condition related to the noise among the measurement conditions received from the server apparatus 30 (Step S107). As described above, the measurement condition related to the noise includes, for example, the ratio of the sound pressure level of the target sound to the sound pressure level of the noise (signal to noise ratio). When there is a measurement condition related to the noise (YES at S107), the mobile device 20 determines whether the noise meets the measurement condition (Step S108). When there is no measurement condition related to the noise (NO at S107) or when the noise meets the measurement condition (YES at S108), the mobile device 20 (the ambient sound detection section 232) starts recording the ambient sound (Step S110). On the other hand, when the noise does not meet the measurement condition (NO at S108), the mobile device 20 does not record the ambient sound (Step S109). Thus, the higher quality ambient sound data can be actively collected.

### (A-2-3. Guidance to Proper Location and Posture (S105 in Fig. 4))

Fig. 5 is a flowchart for guiding the mobile device 20 to the proper recording location and posture in the first embodiment (details of S105 in Fig. 4). Figs. 6(A) to 6(C) illustrate examples of displays of the first to third screens used in the flowchart of Fig. 5. The mobile device 20 acquires the proper location and posture information as the measurement condition related to the ambient sound (Step S201). Next, the mobile device 20 (the recording control section 233) measures the initial location and posture of the mobile device 20 by means of the distance measurement section 237 and the posture measurement section 238 (Step S202). Specifically, the mobile device 20 executes the following process.

First, the mobile device 20 (the display section 236) displays a screen 251 as illustrated in Fig. 6(A) to measure the initial location and posture, and gives instructions to the user to hold the camera 208 of the mobile device 20 over the machine to be diagnosed 40. After the user holds the camera 208 of the mobile device 20 over the machine to be diagnosed 40, the distance measurement section 237 and the posture measurement section 238 calculate the distance and the posture of the mobile device 20 and the machine to be diagnosed 40. The calculation of the distance and posture is executed by an algorithm for initial location and posture estimation based on information obtained from the acceleration sensor 205, the gyro sensor 206, the geomagnetic field sensor 207, and the camera 208.

In the first embodiment, the distance and the posture are obtained by calculating a posture angle of the mobile device 20 based on values of the acceleration and the geomagnetic field obtained from the acceleration sensor 205 and the geomagnetic field sensor 207, and by calculating the distance to the machine to be diagnosed 40 by triangulation using an elevation angle of the mobile device 20.

The measurement method of the distance and the posture is not limited to this method, but can also be executed using the camera 208, for example. That is, using a shooting image obtained by the camera 208 as input, feature points are extracted and matched with feature points detected in a past shooting image to obtain displacements of the feature points. The distance and the posture of the mobile device 20 may then be estimated by estimating the camera location and the camera posture using the acquired displacements of the feature points. Furthermore, the estimations of the distance and the posture by multiple methods may be combined.

Next, the mobile device 20 (the distance measurement section 237 and the posture measurement section 238) tracks change amounts of the location and the posture of the mobile device 20 from its initial location (Step S203 in Fig. 5). The tracking is executed using an algorithm for self-location estimation from information obtained from the acceleration sensor 205, the gyro sensor 206, the geomagnetic field sensor 207, and the camera 208.

In the first embodiment, the algorithm for self-location estimation uses an algorithm that determines a direction and a speed of movement by taking a series of images with the camera 208 and comparing a difference in location of the same feature point in two images. More specifically, the algorithm uses, for example, the algorithm of a known method called a Simultaneous Localization and Mapping (SLAM).

In the SLAM, the self-location of the mobile device 20 is sequentially estimated by the following process. In other words, the shooting images are successively input from the camera 208, and the process of detecting the feature points is successively executed for each of the input shooting images. The feature points detected in the newly input shooting image are compared with the feature points detected in the past shooting image that have been input one time before, and the feature points are matched. In this matching, the feature points for which the magnitudes of the differences in feature value are equal to or less than a predetermined threshold are determined to be the same feature points as one another. Based on the matching, the displacement and the direction of movement between the two times are estimated. Furthermore, the current estimated location and posture of the mobile device 20 is determined from these estimated values of the displacement and the direction of movement and the estimated location and posture of the mobile device 20 at the time one time before.

The algorithm for self-location estimation is not limited to the above-described content, but may also be used to calculate the self-location by acquiring reference data associated with a reference image prepared in advance and the location and the posture of the mobile device 20 at which the reference image was taken, and calculating the similarity between the shooting image input from the camera 208 and the reference image. Alternatively, a traveled distance from the initial location and a posture change amount from the initial posture may be measured by accumulating the values of the acceleration sensor 205 and the gyro sensor 206. The estimation may be executed by combining multiple algorithms.

Returning to Fig. 5, the mobile device 20 (the recording control section 233) determines whether the current location and posture of the mobile device 20 based on the result of Step S203 has reached the proper location and posture (Step S204). When the proper location and posture has not been reached (NO at S204), the mobile device 20 (the recording control section 233) provides a guidance display via the display section 236 to make the mobile device 20 reach the proper location and posture (Step S205).

Fig. 6(B) is an example of a screen 252 used at Step S205, which displays a guidance instruction to move the mobile device 20 in a direction away from the machine to be diagnosed 40. Here, the recording control section 233 changes the display content according to the current location of the mobile device 20 and the remaining distance to the proper location. That is, the recording control section 233 displays the current location of the mobile device 20 and the proper location condition, and when the distance is too close, as illustrated in Fig. 6(B), the recording control section 233 displays the words "Please move away from the target machine." to encourage the user to move away. On the other hand, when the distance is too far, the words "Please approach the target machine." is displayed to encourage the user to move closer. Accordingly, the display content changes according to the remaining distance to the proper location, allowing the user to intuitively and objectively grasp the remaining distance as he or she travels with the mobile device 20 while watching the display.

Similarly, for the posture of the mobile device 20, the instructions are displayed for the user to rotate the mobile device 20 by displaying the words. In addition to or instead of such a display, a scale line display format may be used. In this case, the interface may increase the scale as the user approaches the proper posture and decrease the scale as the user moves away from the proper posture.

When the current location and posture of the mobile device 20 has reached the proper location and posture (YES at S204 in Fig. 5), the mobile device 20 (the recording control section 233) displays that it has reached the proper location and posture (Step S206). Fig. 6(C) is an example of a screen 253 used in Step S206, which displays that the mobile device 20 has reached the proper location (and the proper posture). The screen 253 in Fig. 6(C) includes an evaluation start button 261 to start evaluating the noise. By pressing the evaluation start button 261, the process proceeds from Step S105 to Step S106 in Fig. 4.

### (A-2-4. Noise calculation (S106 in Fig. 4))

### (A-2-4-1. Concept of Noise Calculation)

As described above, the noise calculation calculates the estimated sound pressure level of the noise included in the ambient sound (hereinafter referred to as "noise sound pressure level"). The following describes the concept of the calculation method of the noise sound pressure level.

The ambient sounds occurring at the machine to be diagnosed 40 include the sound emitted by the machine to be diagnosed 40 itself (the target sound) and other noises. Therefore, in the first embodiment, a reference value (a reference sound pressure level) for the sound pressure level of the target sound is established in advance as a physical model according to the specifications (the model) of the machine to be diagnosed 40, the operation status of the machine to be diagnosed 40 (the engine rotation speed and the like.), and the locations of the machine to be diagnosed 40 and the mobile device 20, and stored in the physical model storage section 241. Then, in the actual sound collection or recording, the sound pressure level of the ambient sound (the detected sound pressure level) is obtained with the specifications of the machine to be diagnosed 40, the operation status of the machine to be diagnosed 40, and the locations of the machine to be diagnosed 40 and the mobile device 20 as predetermined. By setting the machine to be diagnosed 40 and the mobile device 20 in a predetermined status, the conditions for acquiring the sound pressure level (the detected sound pressure level) of the ambient sound can always be kept constant. The value obtained by subtracting the reference sound pressure level of the target sound from the detected sound pressure level of the ambient sound can be considered as the estimated value of the sound pressure level of the noise (the estimated sound pressure level).

Fig. 7(A) illustrates a relationship between the machine to be diagnosed 40 (the sound source) and the measurement points P1 to P3 in the first embodiment, and Fig. 7(B) illustrates a relationship between a distance between the machine to be diagnosed 40 and each of the measurement points P1 to P3 in Fig. 7(A) and the sound pressure level of the target sound. The horizontal axis in Fig. 7(B) is the distance from the machine to be diagnosed 40 (the sound source) to the mobile device 20 (the microphone 209), and the vertical axis is a logarithmic display of the detected sound pressure level of the target sound.

In Fig. 7(B), the sound pressure level for each of the measurement points P1 to P3 is the value detected under the noise-free conditions (that is, the detected sound pressure level of the ambient sound is equal to the detected sound pressure level of the target sound). The straight line L is calculated by a linear regression (a least square method in this case) using each of the measurement points P1 to P3, and can be represented as a linear function. As can be seen from Fig. 7(B), the longer the distance, the lower the sound pressure level of the ambient sound (the target sound). In other words, the slope of the straight line L represents the attenuation coefficient. By using the linear function represented as the straight line L, the reference sound pressure level of the target sound can be calculated for a point other than the measurement points P1 to P3, as long as the distance is specific.

In the first embodiment, the reference sound pressure level of the target sound is calculated using the straight line L illustrated in Fig. 7(B) as the linear function. When there is a difference between the detected sound pressure level of the ambient sound and the reference sound pressure level of the target sound during the actual recording, the difference is treated as the estimated sound pressure level of the noise.

When generating the physical model, the number of the measurement points is not limited to three, but may be more. In addition, instead of one detection of the sound pressure level at a single measurement point, multiple detections may be executed and the average value may be used. Furthermore, with respect to the method of estimating the physical model from the measurement point, it is not limited to the linear regression only, but may also be a curvilinear regression.

The physical model is created corresponding to the model of the machine to be diagnosed 40 and the engine rotation speed at which the physical model is created. For example, a physical model is created for a 20-ton vehicle weight class at idling (the lowest rotation speed of an internal combustion engine).

### (A-2-4-2. Specific Process for Noise Evaluation)

Fig. 8 is a flowchart for calculating a noise in the first embodiment (details of S106 in Fig. 4). As described above, in the noise calculation, the difference between the detected sound pressure level of the ambient sound and the reference sound pressure level of the target sound is calculated as the estimated sound pressure level of the noise.

When calculating the noise, the mobile device 20 (the target information acquisition section 234) acquires information for selecting the physical model (the model selection information) from the machine to be diagnosed 40 (Step S301 in Fig. 8). The model selection information is information (the target information) including specifications (the model information) of the machine to be diagnosed 40 and the operation information (the engine rotation speed) of the machine to be diagnosed 40.

Next, the mobile device 20 selects the physical model from the physical model storage section 241 using the model selection information (the target information) (Step S302). As described above, in the first embodiment, the linear function (the straight line L in Fig. 7(B)) that defines the relationship between the distance between the machine to be diagnosed 40 and the mobile device 20 (the microphone 209) and the reference sound pressure level of the target sound is used as the physical model. Therefore, the physical model corresponding to the model selection information (the target information) is selected.

Next, the mobile device 20 acquires the ambient sounds using the microphone 209 (Step S303). Since the acquisition of the ambient sounds here is for calculating the sound pressure level of the noise, no recording is made. However, the recording may be made for future evaluation.

Next, the mobile device 20 acquires the current distance (a present distance) between the machine to be diagnosed 40 and the mobile device 20 (Step S304). The current distance is calculated in the same way as in Steps S202 and S203 in Fig. 5.

Next, the mobile device 20 executes the noise calculation, that is, the calculation of the estimated sound pressure level of the noise (Step S305). As described above, the estimated sound pressure level of the noise is obtained by subtracting the reference sound pressure level of the target sound from the detected sound pressure level of the ambient sound. Therefore, the mobile device 20 first calculates the reference sound pressure level of the target sound corresponding to the current distance obtained at Step S304 in the physical model selected at Step S302. Then, the estimated sound pressure level of the noise is calculated by subtracting the reference sound pressure level of the target sound from the detected sound pressure level of the ambient sound obtained at Step S303.

### (A-2-5. Post-Recording Processing)

After recording (S110 in Fig. 4) of the ambient sound (the target sound) is completed, the mobile device 20 (the recording control section 233) transmits the recorded ambient sound data (the ambient sound data) together with additional information to the server apparatus 30 at a predetermined timing. The predetermined timing here can be, for example, immediately after the recording is completed. Alternatively, when the communication network 50 is not available, such as when the machine to be diagnosed 40 and the mobile device 20 are located deep in the mountains, then the timing may be when the mobile device 20 is moved and the communication network 50 becomes available. Alternatively, it may be the timing when the user of the mobile device 20 operates the mobile device while the communication network 50 is available.

The additional information transmitted with the ambient sound data can include, for example, any or all of the target information, the distance and posture data, and the noise data. As described above, the target information, the specifications (the model) and the status (the engine rotation speed) of the machine to be diagnosed 40 are included. The distance and posture data is data indicating the distance and the posture of the machine to be diagnosed 40 and the mobile device 20 (the microphone 209). The noise data includes the estimated sound pressure level of the noise included in the ambient sound.

### [A-3. Effect of First Embodiment]

As is clear from the above description, the sound collection system 10 in the first embodiment guides the location of the mobile device 20 based on the measurement conditions transmitted from the server apparatus 30 when the mobile device 20 collects the ambient sound data. Thereafter, the noise is calculated in the noise calculation section 239 to determine the measurement status when measuring the ambient sound data, and only the ambient sound data that is determined to be in an appropriate measurement status can be recorded.

Then, since only the ambient sound data determined to be in the appropriate measurement status is transmitted to the server apparatus 30, it is possible to collect the high-quality ambient sound data (the target sound data) meeting the measurement conditions after evaluating the noise. Therefore, the analysis accuracy for analyzing the target sound data improves, and the highly accurate abnormality can be determined.

Since the additional information is transmitted in addition to the ambient sound data, the server apparatus 30 can analyze the ambient sound data measured under the appropriate measurement status based on the additional information, and can perform the analysis without degrading the diagnosis accuracy.

According to the first embodiment, the estimated sound pressure level of the noise included in the ambient sound is calculated based on the detected sound pressure level of the ambient sound occurring around the machine to be diagnosed 40 (the analysis target) and the reference sound pressure level of the target sound corresponding to the distance from the machine to be diagnosed 40 to the microphone 209 (the ambient sound detection means) and identified using the physical model (S106 in Fig. 4, and Fig. 7(B) and Fig. 8). This makes it possible to calculate the estimated sound pressure level of the noise even in the ambient sound such as a construction site where the noise is likely included in the ambient sound, and to perform the processing according to the estimated sound pressure level of the noise.

In the first embodiment, the physical model storage section 241 (Fig. 2B) stores a plurality of the physical models for the respective operation statuses of the machine to be diagnosed 40 (the analysis target). The noise calculation section 239 calculates the estimated sound pressure level of the noise using the physical model corresponding to the operation status (the engine rotation speed) of the machine to be diagnosed 40 (S106 in Fig. 4, and Fig. 8). This makes it possible to calculate the estimated sound pressure level of the noise based on the operation status of the machine to be diagnosed 40, thereby improving the calculation accuracy of the estimated sound pressure level of the noise.

In the first embodiment, the physical model storage section 241 (Fig. 2B) stores the plurality of physical models for the respective specifications of the machine to be diagnosed 40 (the analysis target). The noise calculation section 239 calculates the estimated sound pressure level of the noise using the physical model corresponding to the specification of the machine to be diagnosed 40 (S106 in Fig. 4, Fig. 8). This makes it possible to calculate the estimated sound pressure level of the noise based on the specification (the model and the like.) of the machine to be diagnosed 40, thereby improving the calculation accuracy of the estimated sound pressure level of the noise.

In the first embodiment, the physical model is represented as the linear function in which the distance between the machine to be diagnosed 40 (the analysis target) and the microphone 209 (the ambient sound detection means) is the function of the reference sound pressure level of the target sound (Fig. 7(B)). This makes it possible to calculate the reference sound pressure level of the target sound using the physical model with a relatively small load.

In the first embodiment, the sound collection system 10 includes the recording control section 233 (the sound collection control section) that determines whether or not to collect the ambient sounds based on the ratio (the signal to noise ratio) of the reference sound pressure level of the target sound and the estimated sound pressure level of the noise (Fig. 2B). As a result, the collection of the target sound is stopped when the noise is excessive, such as at a construction site or other environments where the ambient sounds are likely to include the noise. In other words, the collection of the target sound is limited to cases where the noise is not excessive. This makes it possible to collect the high-quality target sound, which improves the analysis accuracy of the target sound and allows for the highly accurate abnormality to be determined. As a result, the collected target sounds can be used appropriately (for example, the status determination of the analysis target).

In the first embodiment, the sound collection system 10 includes the distance measurement section 237 that measures the distance between the machine to be diagnosed 40 (analysis target) and the microphone 209 (the ambient sound detection means), the posture measurement section 238 that measures the postures of the machine to be diagnosed 40 and the microphone 209, and the location and posture guidance section 240 (the guidance means) that determines a measurement status of the ambient sounds based on the distance and the posture, and guides the location or the posture of the microphone 209 according to the measurement status (Fig. 2B). This makes it possible to adjust the location or the posture of the microphone 209 more suitably.

### <B. Second Embodiment>

### [B-1. Configuration (Difference from First Embodiment)]

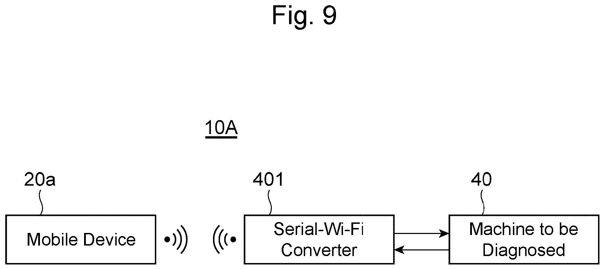

Fig. 9 illustrates a simplified configuration diagram of an overall configuration of a sound collection system 10A according to the second embodiment of the present invention. The sound collection system 10 of the first embodiment includes the mobile device 20 and the server apparatus 30 (Fig. 1). In contrast, the sound collection system 10A of the second embodiment does not include the server apparatus 30, but only a mobile device 20a (Fig. 9). In other words, in the second embodiment, the mobile device 20a serves as the server apparatus 30. In the following, the similar configuration as in the first embodiment will be omitted from the detailed description with the same numeral references. The hardware configuration of the mobile device 20a is the same as that of the mobile device 20 illustrated in Fig. 2A.

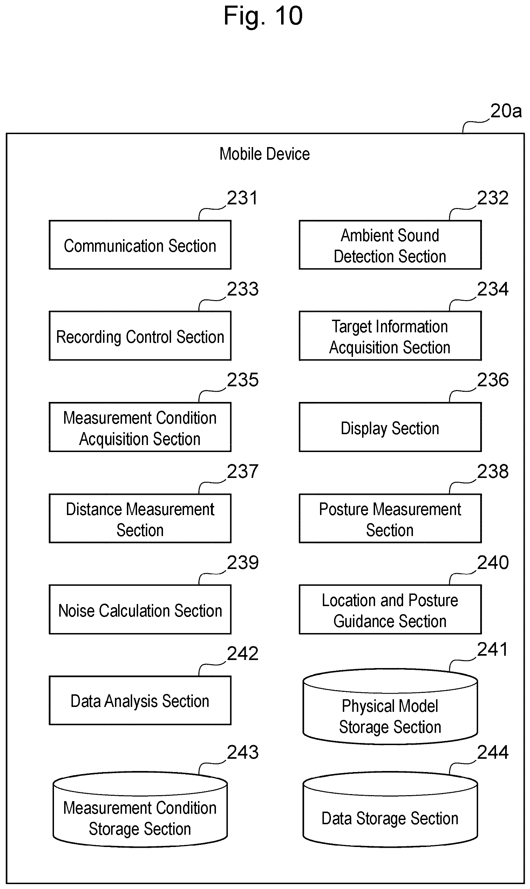

Fig. 10 illustrates an example of a functional configuration diagram of the mobile device 20a in the second embodiment. Each function of the mobile device 20a illustrated in Fig. 10 is realized by executing a program stored in the storage device 203 illustrated in Fig. 2A. In other words, each function illustrated in Fig. 10 is configured as a function of a CPU 201 (a processing unit) of the mobile device 20a. The processing unit of the mobile device 20a includes the communication section 231, the ambient sound detection section 232, the recording control section 233, the target information acquisition section 234, the measurement condition acquisition section 235, the display section 236, the distance measurement section 237, the posture measurement section 238, the noise calculation section 239, the location and posture guidance section 240, the physical model storage section 241, a data analysis section 242, a measurement condition storage section 243, and a data storage section 244.

The data analysis section 242, the measurement condition storage section 243, and the data storage section 244 of the mobile device 20a have the similar configurations as those of the data analysis section 302, the measurement condition storage section 303, and the data storage section 304 of the server apparatus 30 of the first embodiment.

### [B-2. Control of Second Embodiment]

The control of the mobile device 20a of the second embodiment is basically the same as the control of the mobile device 20 of the first embodiment. However, as described above, the mobile device 20a of the second embodiment differs from the mobile device 20 of the first embodiment in that the mobile device 20a also executes the same functions as the server apparatus 30 of the first embodiment.

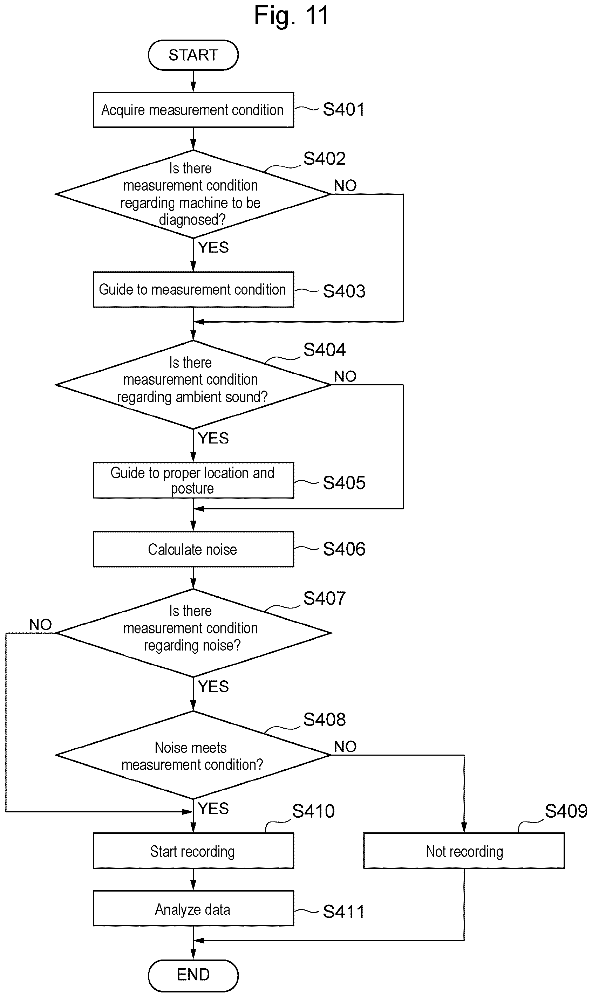

Fig. 11 is a flowchart illustrating a process executed by the mobile device 20a of the second embodiment. Steps S401, S402, S403, S404, S405, S406, S407, S408, S409, and S410 of Fig. 11 are basically the same as Steps S101, S102, S103, S104, S105, S106, S107, S108, S109, and S110 of Fig. 4. However, in the second embodiment, there is no server apparatus like the server apparatus 30 of the first embodiment. Therefore, the acquisition of the measurement conditions in Step S401 is executed inside the mobile device 20a.

In Step S411, the mobile device 20a (the data analysis section 242) executes the data analysis based on the recorded ambient sound data and the additional information.

### [B-3. Effect of Second Embodiment]

According to the second embodiment as described above, the following effect can be achieved in addition to or instead of the effect of the first embodiment. According to the second embodiment, since the data analysis section 302 is provided in the mobile device 20a (Fig. 11), the data analysis can be executed offline.

### <C. Variation>

The present invention is not limited to the above respective embodiments, and various configurations can be adopted based on the description herein. For example, the following configuration can be adopted.

### [C-1. Configuration]

In the sound collection system 10 of the first embodiment, the noise sound pressure level is calculated at the mobile device 20 to determine whether or not the recording is possible (Fig. 4). However, it is also possible to perform the calculation of the noise sound pressure level and/or determine whether or not the recording is possible at the server apparatus 30. In other words, instead of the mobile device 20, the server apparatus 30 can be positioned as the noise calculation device or the ambient sound collection device.

In the first embodiment, the physical model storage section 241 is provided in the mobile device 20 (Fig. 2B). However, it is also possible to provide the physical model storage section 241 in the server apparatus 30. By providing the physical model storage section 241 in the server apparatus 30, it is expected to contribute to improving the processing speed of the mobile device 20, since the storage space of the mobile device 20 is not strained. Also, by providing the server apparatus 30 with the higher accuracy than the mobile device 20, it is expected to improve the overall processing speed.

### (C-2. Control)

### (C-2-1. Physical Model)

In the first embodiment, the physical model is selected using the specification (the model) and the operation status (the engine rotation speed) of the machine to be diagnosed 40 (Fig. 8). However, when, for example, a specific machine to be diagnosed 40 and its operation status are assumed, the physical model selection with the specification or the operation status may be omitted. The same applies to the second embodiment.

The physical model of the first embodiment uses the linear function of the distance between the machine to be diagnosed 40 and the mobile device 20 and the reference sound pressure level of the target sound (see Fig. 7(B)). In other words, the physical model of the first embodiment did not consider the frequencies of the ambient sound, the target sound, and the noise. The same is true for the second embodiment. However, when, for example, the target sound is known to occur dominantly only at a specific frequency or only at a specific frequency range, the physical model may reflect the frequency.

For example, when the target sound is known to occur dominantly only at the specific frequency, and when the analysis of the target sound can be executed using only the specific frequency, the noise sound pressure level is calculated for only the specific frequency. In other words, the physical model defines the relationship between the distance and the reference sound pressure level of the target sound at the specific frequency. This physical model is then used to identify the reference sound pressure level (a component of the specific frequency) of the target sound according to the distance. In addition, only the component of the specific frequency is extracted from the detected sound pressure level of the ambient sound using Fourier analysis and the like. The noise sound pressure level (the component of the specific frequency) is calculated by subtracting the reference sound pressure level (the component of the specific frequency) of the target sound from the detected sound pressure level (the component of the specific frequency) of the extracted ambient sound.

This makes it possible to calculate the estimated sound pressure level of the noise with the higher accuracy because the reference sound pressure level of the target sound is estimated or calculated using not only the distance from the machine to be diagnosed 40 (the analysis target) to the microphone 209 (the ambient sound detection means), but also the frequency of the ambient sound.

Alternatively, when the target sound is known to occur dominantly only at the specific frequency range (or when the frequency range of the target sound is not specified), a three-dimensional surface composed of the distance between the machine to be diagnosed 40 and the mobile device 20, the reference sound pressure level of the target sound, and the frequency is used as the physical model. Then, by cutting the physical model of the 3-dimensional surface by the distance, the 2-dimensional physical model of the frequency corresponding to the distance and the reference sound pressure level of the target sound is obtained.

In this case, the noise calculation section 239 calculates and sums the reference sound pressure level of the target sound corresponding to the distance for each of the frequencies in the specific frequency range. It also obtains the sum of the detected sound pressure levels included in the specific frequency range among the ambient sounds detected by the microphone 209. The noise sound pressure level may then be calculated by subtracting the reference sound pressure level (the total value) of the target sound from the detected sound pressure level (the total value) of the ambient sound.

In the first embodiment, the physical model is selected based on the specification (the model) of the machine to be diagnosed 40 and the operation status (the engine rotation speed) of the machine to be diagnosed 40 (S302 in Fig. 8). In other words, the target sound in the first embodiment is assumed to be the operating sound emitted by the overall machine to be diagnosed 40. The same is true for the second embodiment. However, it is not limited thereto, and the physical model may be configured as the operating sound emitted from the specific part (for example, the pump, the injector) of the machine to be diagnosed 40.

For example, the physical model may be created based on the diagnostic target part, the specification (the model) of the machine to be diagnosed 40, and the operation status (the engine rotation speed) of the machine to be diagnosed 40 (or the diagnostic target part). In other words, a physical model may be created for each of the diagnostic target parts, such as the physical model of a 20-ton vehicle weight class pump obtained in a benchmark test. When there are a plurality of potential diagnostic target parts, the actual selection of the diagnostic target part may be done by the user using the screen of the mobile device 20. This makes it possible to calculate the estimated sound pressure level of the noise according to the part of the machine to be diagnosed 40 (the analysis target), thereby improving the calculation accuracy of the estimated sound pressure level of the noise.

### (C-2-2. Location and Posture Guidance)

In the first embodiment, the guidance to the proper location and posture is provided by means of the display on the display device 211 (S205 and S206 in Fig. 5). However, in addition to or instead of the display, the guidance may be provided using a voice guidance. For example, when a focus is on the calculation of the estimated sound pressure level of the noise, the guidance of the user can be omitted. The same applies to the second embodiment.

In the first embodiment, when the guidance to the proper location is provided, the guidance to the proper posture is also provided (Fig. 5). However, for example, when the posture adjustment of the mobile device 20 is obvious to the user, the guidance to the proper posture may be omitted. The same applies to the second embodiment.

In the first embodiment, the guidance instructions are displayed by the display device 211 (the display section 236) of the mobile device 20 (Figs. 6(A) to 6(C)). However, when, for example, the user executes the operation inside the machine to be diagnosed 40, the guidance instruction may be configured to be displayed on the display device (not illustrated) of the machine to be diagnosed 40. The same applies to the second embodiment.

### (C-2-3. Noise Calculation)

In the sound collection system 10 of the first embodiment, the noise sound pressure level is calculated at the mobile device 20 to determine whether or not the recording is possible (Fig. 4). However, it is also possible for the server apparatus 30 to perform the calculation of the noise sound pressure level and to determine whether or not the recording is possible. That is, the mobile device 20 sends the ambient sound data to the server apparatus 30 regardless of the signal-to-noise ratio, and the server apparatus 30 calculates the noise sound pressure level. The server apparatus 30 may then record the ambient sound data in the data storage section 304 only when the signal-to-noise ratio is equal to or less than a predetermined value.

### (C-2-4. Determination of Possibility of Recording)

In the first embodiment, the mobile device 20 determines whether the recording is possible or not based on the ratio (the signal to noise ratio) of the reference sound pressure level of the target sound to the estimated sound pressure level of the noise (S108 in Fig. 4). The second embodiment is similar (S408 in Fig. 11). However, it is not limited thereto, for example, from the point of view of determining whether or not the recording is possible based on the level of the noise. For example, it is also possible to determine whether or not the recording is possible using the estimated sound pressure level of the noise itself.

Although the embodiments of the present invention have been described in detail above, the present invention is not limited to the above embodiments, and various design changes can be made to the extent that they do not depart from the objective of the invention as described in the claims.

### Reference Signs List

- 10: Sound collection system
- 20: Mobile device (noise calculation device, ambient sound collection device)
- 40: Machine to be diagnosed (analysis target)
- 209: Microphone (ambient sound detection means)
- 233: Recording control section (sound collection control section)
- 237: Distance measurement section
- 238: Posture measurement section
- 239: Noise calculation section
- 240: Location and posture guidance section (guidance means)
- 241: Physical model storage section

## Claims

1. A noise calculation device for calculating a sound pressure level of a noise included in an ambient sound of an analysis target, the ambient sound including a target sound as a sound emitted by the analysis target, the noise calculation device comprising:
a storage device storing a program; and
a processing unit configured to execute the program,
wherein the processing unit:
identifies a reference sound pressure level of the target sound corresponding to a distance from the analysis target to the ambient sound detection device that collects the ambient sound of the analysis target, using a physical model that defines a relationship between the distance and the reference sound pressure level of the target sound, and
includes a noise calculation section that calculates an estimated sound pressure level of the noise included in the ambient sound based on the detected sound pressure level of the ambient sound detected by the ambient sound detection device and the reference sound pressure level of the target sound identified using the physical model.

2. The noise calculation device according to claim 1,
wherein the noise calculation section identifies the reference sound pressure level of the target sound using the physical model selected according to an operation status of the analysis target.

3. The noise calculation device according to claim 1,
wherein the noise calculation section identifies the reference sound pressure level of the target sound using the physical model selected according to a specification of the analysis target.

4. The noise calculation device according to any one of claims 1 to 3,
wherein the physical model is represented by a linear function in which the distance is a function of the reference sound pressure level of the target sound.

5. The noise calculation device according to any one of claims 1 to 4,
wherein the physical model defines the relationship between the distance and the reference sound pressure level of the target sound according to a frequency of the ambient sound, and
wherein the noise calculation device identifies the reference sound pressure level of the target sound using the physical model selected according to the distance and the frequency of the ambient sound.

6. The noise calculation device according to any one of claims 1 to 5,
wherein the noise calculation section identifies the reference sound pressure level of the target sound using the physical model selected according to a part of the analysis target.

7. A sound collection system for collecting a target sound as a sound emitted by an analysis target, the sound collection system comprising:
a server apparatus; and
a mobile device connected to the server apparatus,
wherein the mobile device includes:
a storage device storing a program; and
a processing unit configured to execute the program,
wherein the processing unit of the mobile device includes an ambient sound detection section that measures the distance to the analysis target and detects a sound pressure level of an ambient sound occurring around the analysis target,
wherein the server apparatus includes:
a storage device storing a program; and
a central processing unit configured to execute the program,
wherein the central processing unit of the server apparatus includes:
a physical model storage section that stores a physical model that defines a relationship between the distance and the reference sound pressure level of the target sound; and
a noise calculation section that calculates an estimated sound pressure level of a noise included in the ambient sound based on the detected sound pressure level of the ambient sound and the reference sound pressure level of the target sound that corresponds to the distance and is identified using the physical model.

8. The sound collection system according to claim 7,
wherein the processing unit of the mobile device includes a recording control section that determines whether or not the ambient sound is allowed to be collected based on a ratio of the reference sound pressure level of the target sound to the estimated sound pressure level of the noise or the estimated sound pressure level of the noise.

9. The sound collection system according to claim 7 or 8,
wherein the processing unit of the mobile device includes:
a distance measurement section that measures the distance to the analysis target and a posture with respect to the analysis target;
a location and posture guidance section that determines a measurement status of the ambient sound based on the distance and the posture, and guides a location or a posture with respect to the analysis target according to the measurement status; and
a display section that causes the display device of the mobile device to display a guidance display for guiding the location or the posture with respect to the analysis target.
